Europäisches Patentamt

European Patent Office

Office européen des brevets

(19)

(11) Veröffentlichungsnummer: **0 350 619**

**A2**

## (12) EUROPÄISCHE PATENTANMELDUNG

(21) Anmeldenummer: 89110309.5

(51) Int. Cl.4: **H02G 3/22 , H01B 17/30**

(22) Anmeldetag: 07.06.89

(30) Priorität: 11.07.88 DE 3823479

(43) Veröffentlichungstag der Anmeldung:
**17.01.90 Patentblatt 90/03**

(84) Benannte Vertragsstaaten:
**DE ES FR GB**

(71) Anmelder: WOCO Franz-Josef Wolf & Co.
Sprudelallee 19
D-6483 Bad Soden-Salmünster(DE)

(72) Erfinder: Wolf, Franz Josef
Sprudelallee 19
D-6483 Bad Soden-Salmünster(DE)
Erfinder: Kaminski, Peter
Am Rausch 16
D-6460 Gelnhausen 4(DE)
Erfinder: Frischkorn, Heinz
Schlossstrasse 2
D-6497 Steinau(DE)

(74) Vertreter: Jaeger, Klaus, Dr. et al
Patentanwälte JAEGER, LORENZ & KOESTER
Pippinplatz 4a
D-8035 München-Gauting(DE)

(54) **Spritzwasserdichtes Kabeldurchführungselement.**

(57) Es wird ein spritzwasserdichtes Kabeldurchführungselement bereitgestellt, das eine aus mehreren in etwa gleichen Sektorelementen aufgebaute kreisscheibenförmige Dichtung aus einem gummielastischen Material besitzt. Mindestens eine dieser Sektorelemente besitzt eine durchgehende Bohrung zur dichtenden Durchführung von Kabeln bzw. eines Kabelbaumes. Auf der peripheren Außenmantelfläche der Dichtung läuft eine radial nach außen offene Nut zur Aufnahme des Randes einer abzudichtenden Öffnung um.

Die Sektorelemente werden durch ein sternförmiges Halteteil mit einer der Zahl der Sektorelemente entsprechenden Zahl von Halteflügeln zusammengehalten. Die Halteflügel erstrecken sich radial vom Kern des Halteteils und bestehen aus zwei beabstandeten kreissegmentförmigen Scheiben, zwischen die die Randbereiche der Sektorelemente unter Kompression eingeführt werden können. Auf das Halteteil ist ein Ring aufschraubbar, der die Dichtung in ihrem peripheren Bereich zur Herstellung einer besseren Abdichtung gegenüber dem Rand der Öffnung z.B. in einer Spritzwand verpreßt. Durch das Halteteil mit seinen Halteflügeln wird zudem ein axiales Durchschlagen der Dichtung verhindert. Durch Wahl geeigneter Sektorelemente ist es möglich, das erfindungsgemäße Kabeldurchführungselement an die Anforderungen der Praxis hinsichtlich Zahl der abzudichtenden Kabel bzw. der Dicke der abzudichtenden Kabelbäume anzupassen.

## Spritzwasserdichtes Kabeldurchführungselement

Die Erfindung betrifft ein spritzwasserdichtes Kabeldurchführungselement mit einer kreisscheibenförmigen Dichtung aus einem gummielastischen Material, die auf ihrer peripheren Außenmantelfläche eine umlaufende, radial nach außen offene Nut zur Aufnahme des Randes einer abzudichtenden Öffnung und mindestens eine durchgehende Bohrung zur dichtenden Durchführung von Kabeln bzw. eines Kabelbaumes besitzt.

Derartige Kabeldurchführungselemente werden insbesondere zur Durchführung von Kabeln bzw. Kabelbäumen durch die Spritzwand eines Automobils eingesetzt.

Es ist bekannt, zu diesem Zweck Spritzwandtüllen zur Anwendung zu bringen. Bei einer derartigen Spritzwandtülle müssen jedoch zuerst die Kabel durch die Tülle hindurchgeführt werden. Erst daran anschließend können die Kabelenden mit den dazugehörigen Steckern ausgestattet werden.

In der heutigen Zeit wird im Automobilbau immer mehr versucht, fertige Module beim Zusammensetzen der Kraftfahrzeuge einzusetzen. So wird auch versucht, fertige ,bereits mit den dazugehörigen Steckern ausgestattete Kabelstränge bzw. Kabelbäume direkt vom Zulieferer zu beziehen und dann in die Karosserie einzusetzen. Mit den oben beschriebenen Spritzwandtüllen ist eine derartige Modulbauweise jedoch nicht zu verwirklichen, da die Kabel erst nach dem Durchschieben durch die Spritzwandtülle mit den Steckern ausgestattet werden können.

Es sind auch Kabeldurchführungselemente bzw. Dichtungen für Spritzwände der hier in Rede stehenden Art bekannt, die aus einer kreisscheibenförmigen Dichtung aus einem gummielastischen Material bestehen. Diese Dichtung ist mit mindestens einer durchgehenden Bohrung zur abdichtenden Durchführung von Kabel bzw. eines Kabelbaumes ausgestattet.

Da diese bekannte Dichtung einstückig ist, bestimmt die Zahl der Bohrungen und deren Durchmesser die Anzahl und Dicke der durchzuführenden Kabel bzw. Kabelbäume.

Im Automobilbau ist jedoch die Zahl der durch eine Spritzwand hindurchzuführenden Kabel bzw. Kabelbäume stark von der Ausstattung des herzustellenden Automobils abhängig. Mit anderen Worten, bei einer Grundausstattung müssen wesentlich weniger Kabel durch die Spritzwand abgedichtet hindurchgeführt werden als bei einem alle Extras aufweisenden Automobil. Diese bekannte Dichtung ist jedoch nicht in der Lage, diese Anforderung zu erfüllen. Werden nämlich zu wenig Kabel durch die Bohrung hindurchgeführt, dann werden diese nicht ausreichend abgedichtet, so daß Spritzwasser durch die Spritzwand hindurchgelangen kann.

Werden zuviele Kabel durch die Bohrungen hindurchgeführt, bzw. ist der hindurchgeführte Kabelbaum zu dick, dann besteht die Gefahr, daß die bekannte Dichtung axial durchschlägt, und zwar nach vorne oder nach hinten. Dies kann dazu führen, daß die Dichtung aus der Öffnung der Spritzwand,in die sie eingesetzt ist, beim Fahrbetrieb herausgedrückt wird. Auch ist beim axialen Durchschlagen der bekannten Dichtung nicht gewährleistet, daß der Rand der in der Spritzwand ausgenommenen Bohrung durch den Außenrand der bekannten Dichtung spritzwasserdicht abgedichtet wird.

Aufgabe der vorliegenden Erfindung ist es, ein spritzwasserdichtes Kabeldurchführungselement bereitzustellen, das frei von den Nachteilen der bekannten Kabeldurchführungselemente ist und das somit einerseits seine Dichtungsfunktion voll erfüllt und andererseits variabel an die Zahl der hindurchzuführenden Kabel bzw. Kabelstränge angepaßt werden kann.

Gelöst wird diese Aufgabe durch ein im Anspruch 1 beschriebenes Kabeldurchführungselement.

Das erfindungsgemäße Kabeldurchführungselement zeichnet sich somit u.a. dadurch aus, daß die eigentliche kreisscheibenförmige Dichtung aus mehreren in etwa gleichen Sektorelementen zusammengesetzt ist. Mindestens eines dieser Sektorelemente besitzt eine Bohrung zur Durchführung von Kabeln bzw. eines Kabelbaumes. Die anderen Sektorelemente können eine solche Bohrung aufweisen, müssen es allerdings nicht. Durch Austausch der Sektorelemente ohne Bohrung gegen solche mit Bohrung kann das erfindungsgemäße Kabeldurchführungselement den Bedürfnissen der Automobilbauer angepaßt werden. Auch kann durch Wahl der Durchmesser der Bohrungen eine Anpassung an die Dicke der Kabel bzw. Kabelbäume erzielt werden. Durch diese Sektorbauweise ist das erfindungsgemäße Kabeldurchführungselement außerordentlich flexibel an die Gegebenheiten anpaßbar.

Die Sektorelemente stoßen in ihrem peripheren, radial äußeren Bereich, seitlich aneinander und ergeben einen radial außen umlaufenden Kreisring. Auf der Außenmantelfläche dieses Kreisringes läuft eine nach radial außen offene Nut um, in welche der Rand der in der Spritzwand ausgenommenen Öffnung einrastet, wenn das erfindungsgemäße Kabeldurchführungselement an seinem bestimmungsgemäßen Platz gebracht wird. Die Sektorelemente werden durch ein Halteteil zusammengehalten, das einen zentralen und axial angeordneten Kern besitzt, der insbesondere zylindrisch ist. Von diesem Kern ausgehend erstrecken sich sternförmig Halteflügel, deren Anzahl der Anzahl der Sektorelemente entspricht. Diese Halteflügel besitzen zueinander einen gleichen Winkelabstand. Sie bestehen aus zwei parallelen und beabstandeten Scheiben, die insbesondere gleiche Flächenabmessungen haben. In den zwischen diesen beiden Scheiben geschaffenen Zwischenraum werden die sich radial erstreckenden Randbereiche der Sektorelemente sandwichartig eingeschoben. Die beiden Scheiben eines Halteflügels haben dabei einen solchen Abstand, daß die beiden Randbereiche zweier angrenzender Sektorelemente unter einer gewissen Kompression in den Zwischenraum zwischen den beiden Scheiben eingeschoben sind.

Dieses sternförmige Halteteil verleiht der aus einem gummielastischen Material bestehenden Dichtung eine große Stabilität und verhindert insbesondere ein axiales Durchschlagen der aus den Sektorelementen zusammengesetzten Dichtung.

Die Halteflügel erstrecken sich zweckmäßigerweise nur über einen Teil des Radius der kreisscheibenförmigen Dichtung; sie überlappen insbesondere nicht mit dem radial außen umlaufenden Kreisring.

Nach einer bevorzugten Ausführungsform ist auf einer Seite des sternförmigen Halteteils ein axiales Gewinde angebracht, dessen Längsachse somit mit der Mittelachse der kreisscheibenförmigen Dichtung zusammenfällt. Es handelt sich dabei insbesondere um ein hülsenartiges Gewinde, das die Gewindegänge auf der Außenmantelfläche trägt.

Dieses Gewinde wirkt mit einem auf der Innenwandfläche eines Ringes angebrachten Gewinde zusammen. Dieser Ring besitzt einen Außendurchmesser, der größer ist als der Außendurchmesser der abzudichtenden Öffnung. Beim Aufdrehen des Ringes auf das Gewinde des Halteteils wird der ringzugewandte, zwischen der radial außen umlaufenden Nut, in welche der Rand der abzudichtenden Öffnung eingreift, und der Stirnseite des Ringes befindliche Abschnitt des peripher außen um die Sektorelemente bzw. die Dichtung umlaufenden Kreisringes komprimiert.

Nach einer weiteren bevorzugten Ausführungsform ist der Kern des sternförmigen Halteteils in etwa zylindrisch. Die beiden Scheiben der Halteflügel besitzen dann in etwa die Form eines Kreissektors; sie besitzen die gleiche Fläche und sind einander überlappend angeordnet.

Die Breite der Scheiben erweitert sich somit vom zylindrischen Kern ausgehend bis zu deren peripherem Rand, so daß ihre Stützwirkung sich zum peripheren Rand hin vergrößert. Der Abstand vom peripheren Rand bis zum Kreismittelpunkt entspricht in etwa dem Innenradius des außen umlaufenden Kreisringes.

Nach einer weiterhin bevorzugten Ausführungsform besitzen diejenigen Scheiben der Halteflügel, die auf der dem Ring zugewandten Seite angeordnet sind, an ihrem peripheren Rand eine sich in axialer Richtung (d.h. nach axial außen) erstreckenden Schürze, auf deren äußerer Mantelfläche Gewindegänge angeordnet sind, wobei die Gewindegänge aller Scheiben das mit dem Gewinde des Ringes korrespondierende Gewinde des Halteteils bilden. In diesem Fall ist der Innendurchmesser des Ringes, der auch als Ringmutter bezeichnet werden kann, geringfügig größer als der Außendurchmesser des durch die Halteflügel des Halteteils gebildeten Kreises.

Nach einer weiterhin bevorzugten Ausführungsform ist der Kreisring peripher axial dicker als der durch diesen Kreisring eingefaßte scheibenförmige Bereich der Dichtung des erfindungsgemäßen Kabeldurchführungselementes. Dabei ergibt sich ein zargenartiger, umlaufender, in axialer Richtung zeigender Randvorsprung sowie ein in etwa domförmiges Profil des erfindungsgemäßen Kabeldurchführungselements, wobei der durch den Kreisring eingefaßte scheibenförmige Bereich das flache Dach des Domes bildet. Die in der Außenmantelfläche der Dichtung ausgenommene Nut verläuft dabei insbesondere in derjenigen Ebene, welche in etwa durch den Boden des Domdaches gebildet wird.

Wird das erfindungsgemäße Kabeldurchführungselement gemäß dieser bevorzugten Ausführungsform in die abzudichtende Öffnung z.B. in einer Spritzwand eingesetzt, dann bildet das sternförmige Halteteil zusammen mit den Sektorelementen eine Art Dose oder Haube, die auf eine Wand der Spritzwand aufgesetzt zu sein scheint.

Der bereits erwähnte, mittels eines Gewindes aufschraubbare Ring besitzt vorzugsweise einen zur auf der Außenmantelfläche der Dichtung umlaufenden Nut hin zeigenden, peripher umlaufenden, sich axial erstreckenden Fortsatz, dessen Innenmantelfläche geneigt ist, und zwar von axial außen nach axial innen zur Mittelachse hin. Dadurch ergibt sich eine Art Konus. Beim Aufschrauben des Ringes wird der zum Ring hin zeigende Bereich der Dichtung (genauer des Kreisringes) mit Hilfe der konusartigen Innenmantelfläche komprimiert. Die gummielastische Masse wird dabei sowohl in Richtung auf die Außenmantelfläche der Stege als auch in axialer Richtung zum Randbereich der abzudichtenden Öffnung z.B. in einer Spritzwand verpreßt, so daß eine hervorragende Abdichtung zwischen dem Kabeldurchführungselement und der abzudichtenden Öffnung bzw. dessen Randbereichs erzielt wird. Außerdem verleiht der aufschraubbare Ring dem erfindungsgemäßen Kabeldurchführungselement eine zusätzliche Stabilität hinsichtlich eines axialen Durchschlagens.

Der Ring soll jedoch nicht so weit aufgeschraubt werden, daß er mit der Spritzwand in Kontakt kommt, um das Entstehen einer Lärmbrücke zu verhindern.

Weitere bevorzugte Ausführungsformen sind in den Unteransprüchen 8 bis 12 beschrieben.

Die Erfindung wird nachstehend anhand von Figuren näher erläutert, welche eine bevorzugte Ausführungsform wiedergeben. Von den Figuren zeigen:

Fig. 1 eine perspektivische Ansicht eines erfindungsgemäßen Kabeldurchführungselements in auseinandergezogener Darstellung;

Fig. 2 eine Aufsicht auf ein erfindungsgemäßes Kabeldurchführungselement im zusammengebauten Zustand;

Fig. 3 eine Schnittansicht entlang A-A der Fig. 2;

Fig. 4 eine Schnittansicht entlang B-B der Fig. 2; und

Fig. 5 eine Schnittansicht entlang C-C der Fig. 2.

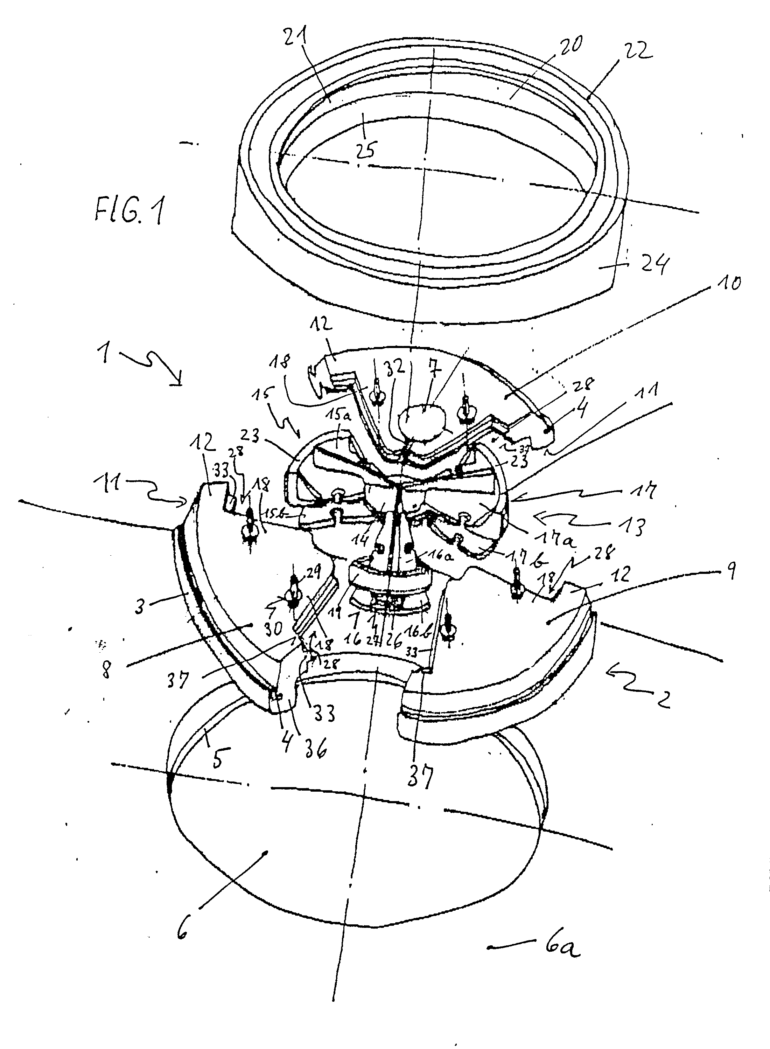

Das in der Fig. 1 gezeigte Kabeldurchführungselement 1 besteht aus drei in ihren Außenabmessungen in etwa gleichen Sektorelementen 8,9,10. Das Sektorelement 10 besitzt eine durchgehende Bohrung 7 zur Durchführung von Kabeln bzw. eines Kabelbaums. Von dieser Bohrung 7 führt ein Schlitz 31 nach radial innen, mit dessen Hilfe das Sektorelement 10 auf die Gabel aufgesteckt werden kann, so daß die Kabel bzw. der Kabelbaum in die Bohrung 7 gelangen bzw. gelangt.

Die Sektorelemente 8,9,10 ergeben im zusammengebauten Zustand eine kreisscheibenförmige Dichtung 2. Sie berühren sich an ihren peripheren Seitenbereichen und bilden einen umlaufenden Kreisring, auf dessen Außenmantelfläche 3 eine umlaufende Nut 4 ausgenommen ist, welche zur Aufnahme des Randes 5 einer abzudichtenden Öffnung 6 in einer Spritzwand 6a dient.

Im Zentrum der durch die Sektorelemente 8,9,10 gebildeten Scheibe lassen diese einen zylindrischen Bereich frei, der von einem zylindrischen axialen Kern 14 eines Halteteils 13 ausgefüllt wird. Die radial innen verlaufenden Seitenflächen sind dabei in dichtender Anlage gegen die Außenmantelfläche des zylindrischen Kerns 14. Von diesem Kern 14 aus erstrecken sich sternförmig drei Halteflügel 15,16,17. Letztere bestehen aus zwei parallelen, beabstandeten, kreissegmentförmigen Scheiben 15a,b;16a,b;17a,b. Zwischen die beiden Scheiben 15a,b;16a,b;17a,b werden beim Zusammenbau die Randbereiche 18 zweier benachbarter Sektorelemente unter Kompression sandwichartig eingeschoben. Die Sektorelemente 8,9,10 besitzen für Fixierungszwecke axial angeformte Nippel 29, die durch Schlitze 31 in Aufnahmebohrungen 30 in den Scheiben 15a,b;16a,b;17a,b eingeführt werden können.

An der Peripherie der kreissegmentförmigen Scheiben 15a,b; 16a,b;17a,b ist eine sich axial erstreckende Schürze 23 angeordnet, auf deren Außenmantelfläche Gewindegänge angeordnet sind, so daß die auf den Schürzen 23 vorhandenen Gewindegänge zusammen ein Gewinde 19 des Halteteils bilden, das mit einem Gewinde 20 eines Ringes 22 kooperiert. Letzteres Gewinde 20 des Ringes 22 ist auf dessen Innenmantefläche angeordnet. Mittels dieser Gewinde 19,20 ist der Ring 22 auf das Halteteil aufschraubbar.

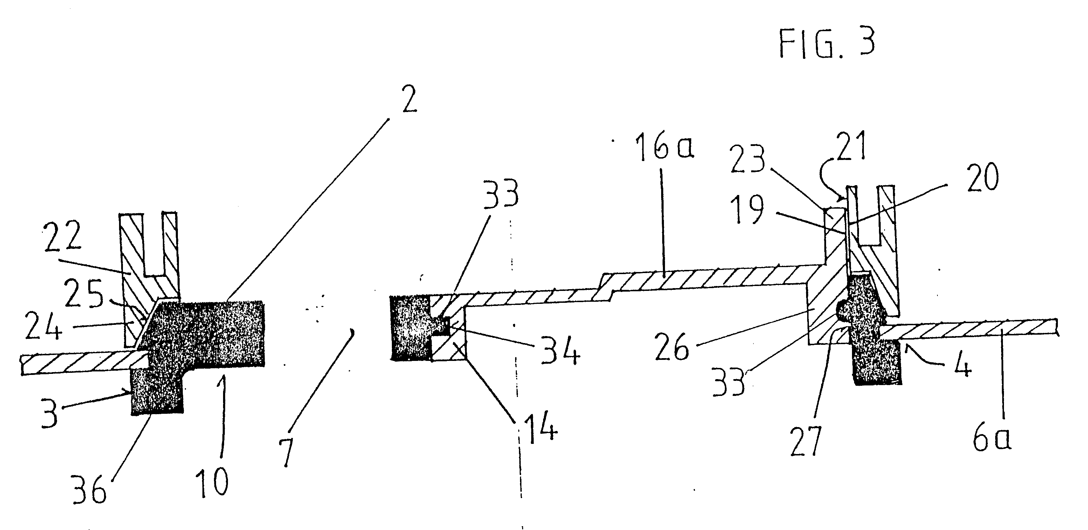

Die kreissegmentförmigen Scheiben 15a,b;16a,b;17a,b sind durch Stege 26 miteinander verbunden, die sich bis zur Peripherie des entsprechenden Kreissegmentes erstrecken. Ihre Außenmantelfläche an der Peripherie ist bündig mit der Außenmantelfläche der Schürzen 23; man vergleiche insbesondere Fig. 3.

Die Breite dieser Stege 26 entspricht in etwa dem Durchmesser des zylindrischen Kerns 14.

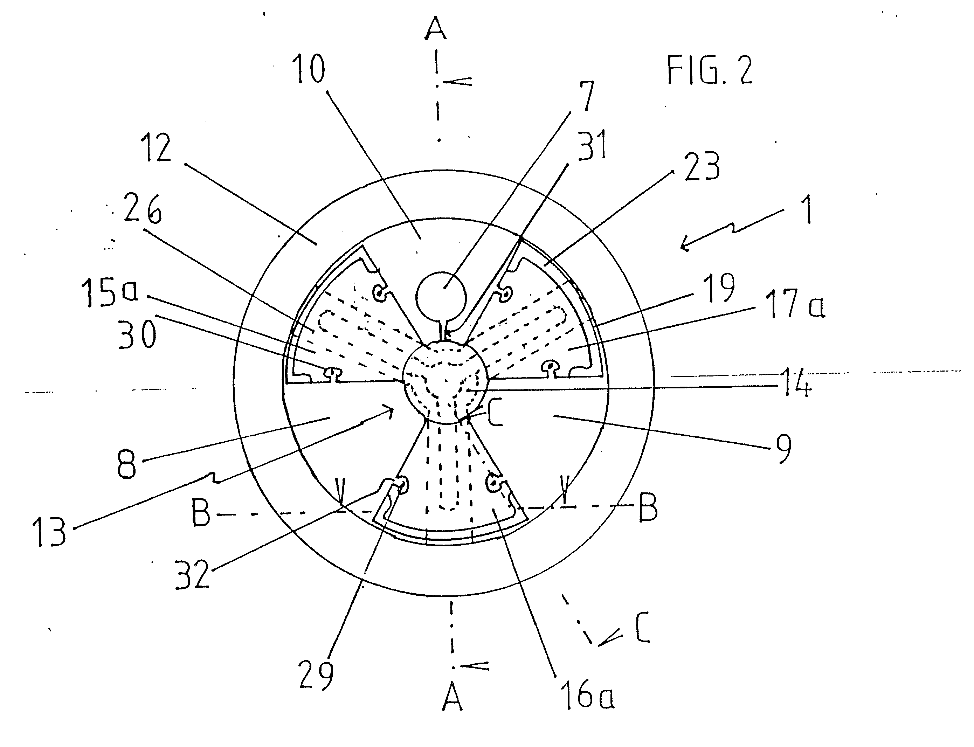

Diese Stege 26 bestehen aus spritztechnischen Gründen im nicht peripheren Bereich aus parallelen Wänden, die zwischen sich einen Spalt freilassen. Ähnliches gilt für den Kern 14, der, wie insbesondere aus der Fig. 2 ersichtlich, ein Hohlzylinder ist, dessen Innenraum mit dem Raum zwischen den beiden genannten Wänden der Stege 26 verbunden ist. Auch die Scheiben 15b,16b,17b sind in diesem Bereich nicht durchgängig, sondern besitzen einen entsprechenden Spalt, so daß in der Fig. 3 (Schnitt A-A) auf der rechten Seite die untere Scheibe nicht gezeigt ist. Ferner ist auch aus der Fig. 3 ersichtlich, daß der zylindrische Kern auf einer Seite durch eine Platte verschlossen, auf der anderen Seite jedoch offen ist.

In der Außenwand des zylindrischen Kerns 14 und in der Außenwand der Stege 26 sind Nuten 34 ausgenommen, welche zur Aufnahme von Wülsten 33 dienen, die an den radial verlaufenden Seitenflächen 35 der Sektorelemente 8,9,10, an den die Ausnehmungen 28 peripher begrenzenden Seitenflächen 37 und auch an der zum zylindrischen Kern 14 hin zeigenden Seitenwand angeformt sind.

Die Sektorelemente 8,9,10 besitzen an ihren radialen Seitenwänden Ausnehmungen 28, die so bemessen sind, daß die Sektorelemente im zusammengebauten Zustand die Stege 26 zwischen sich aufnehmen können, jedoch daran anliegen.

In der Fig. 2 ist das erfindungsgemäße Kabeldurchführungselement im zusammengebauten Zustand gezeigt. Die Stege 26 bzw. deren Wände und der Kern 14 sind mit gestrichelten Linien dargestellt.

Wie aus der Fig. 3 ersichtlich ist, besitzt der Ring 22 eine Schürze 23 mit geneigter Innenmantelfläche.

Der Kreisring 12 der Dichtung 2 (d.h. derjenige Bereich der Dichtung 2, der peripher außerhalb des von dem Halteteil 3 definierten Kreises liegt) ist axial dicker, wobei sich ein axial ausgerichteter zargenartiger Randvorsprung 36 ergibt.

Der in der Fig. 3 im aufgeschraubten Zustand gezeigte Ring 22 hat mit seiner konusförmig ausgestalteten Innenwandfläche 25 den Kreisring in diesem Bereich komprimiert; und zwar in etwa in Richtung der Winkelhalbierenden zwischen der Ebene der Spritzwand 6a und der durch das Zentrum der Dichtung 2 verlaufenden Mittelachse. In der Fig. 3 ist somit dieser Abschnitt des Kreisrings 12 in der komprimierten Form gezeigt. Durch diese Materialverpressung wird eine fluiddichte Abdichtung erzielt.

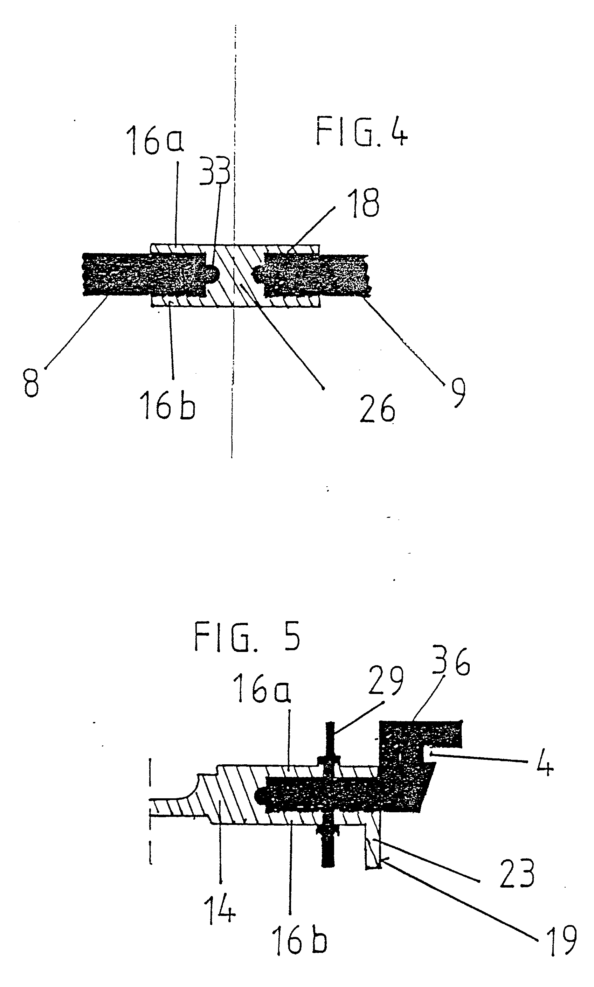

Die Fig. 4 zeigt einen in Form einer Sekante gelegten Schnitt entlang der Linie B-B durch einen Halteflügel, und zwar im peripheren Bereich des Steges 26. Der in der Fig. 5 gezeigte Schnitt entlang der Linie C-C ver läuft radial vom Kern 14 durch den Nippel 29 und den Randvorsprung 36 des Kreisringes 12 der Dichtung 2.

**Ansprüche**

1. Spritzwasserdichtes Kabeldurchführungselement mit einer kreisscheibenförmigen Dichtung aus einem gummielastischen Material, die auf ihrer peripheren Außenmantelfläche eine umlaufende nach nach außen offene Nut zur Aufnahme des Randes einer abzudichtenden Öffnung und mindestens eine durchgehende Bohrung zur dichtenden Durchführung von Kabel bzw. eines Kabelbaumes besitzt, **gekennzeichnet** durch mehrere, in etwa gleiche, im zusammengesetzten Zustand die Dichtung (2) ergebende Sektorelemente (8,9,10), von denen mindestens eine die durchgehende Bohrung (7) aufweist und die in ihrem peripheren Bereich (11) unter Bildung eines radial außen umlaufenden Kreisringes (12) seitlich aneinander stoßen, und durch ein sternförmiges Halteteil (13), das einen mittig und axial angeordneten Kern (14) besitzt, von dem sich eine der Zahl der Sektorelemente (8,9,10) entsprechende Zahl von aus zwei parallelen und voneinander beabstandeten Scheiben (15a,b;16a,b;17a,b) aufgebauten Halteflügeln (15,16, 17) radial erstrecken, wobei im zusammengebauten Zustand die radial verlaufenden Randbereiche (18) der Sektorelemente (8,9,10) unter Kompression zwischen die beiden Scheiben (15a,b;16a,b;17a,b) eingeschoben sind.

2. Kabeldurchführungselement nach Anspruch 1, dadurch **gekennzeichnet**, daß auf einer Seite des sternförmigen Halteteils (13) ein axiales Gewinde (19) angebracht ist, welches mit einem Gewinde (20) zusammenwirkt, das in der Innenwandfläche (21) eines Ringes (22) angeordnet ist, und daß der Ring (22) einen Außendurchmesser besitzt, der größer ist als der Durchmesser der abzudichtenden Öffnung (6).

3. Kabeldurchführungselement nach Anspruch 1 oder 2, dadurch **gekennzeichnet**, daß der Kern (14) des sternförmigen Halteteils (13) in etwa zylindrisch ist und die beiden Scheiben (15a,b;16a,b;17a,b) der Halteflügel (15,16,17) in etwa die Form eines Kreissektors besitzen.

4. Kabeldurchführungselement nach Anspruch 3, dadurch **gekennzeichnet**, daß die ringzugewandten Scheiben (15a,16a,17a) der Halteflügel (15,16,17) an ihrem peripheren Rand eine sich in axialer Richtung erstreckende Schürze besitzen, auf deren äußerer Mantelfläche Gewindegänge angeordnet sind, wobei die Gewindegänge aller Scheiben (15a,16a,17a) das mit dem Gewinde (20) des Ringes korrespondierende Gewinde (19) des Halteteils bilden.

5. Kabeldurchführungselement nach einem der Ansprüche 2 bis 4, dadurch **gekennzeichnet**, daß der Kreisring (12) peripher axial dicker ist als der durch diesen Kreisring (12)eingefaßte scheibenförmige Bereich der Dichtung (2), wobei sich ein zargenartiger, umlaufender Randvorsprung und ein in etwa domförmiges Profil des Kabeldurchführungselementes (1) ergibt und wobei der eingefaßte scheibenförmige Bereich das Dach des Domes bildet.

6. Kabeldurchführungselement nach Anspruch 5, dadurch **gekennzeichnet**, daß die Nut (4) in derjenigen Ebene auf der peripheren Außenmantelfläche (3) verläuft, welche in etwa durch den Boden des Domdaches gebildet wird.

7. Kabeldurchführungselement nach einem der Ansprüche 2 bis 6, dadurch **gekennzeichnet**, daß der Ring (22) zur Nut (4) hin einen peripher umlaufenden, axial erstreckenden Fortsatz (24) besitzt, dessen Innenmantelfläche geneigt ist, und zwar von axial außen nach axial innen zur Mittelachse hin.

8. Kabeldurchführungselement nach einem der vorhergehenden Ansprüche, dadurch **gekennzeichnet**, daß die Scheiben (15a,b;16a,b;17a,b) eines jeden Halteflügels (15,16,17) durch einen sich vom Kern (14) aus radial erstreckenden, mittig auf den Scheibenflächen verlaufenden Steg (26) verbunden sind, dessen periphere Außenmantelfläche (27) mit dem peripheren Rand der Scheiben (15a,b;16a,b;17a,b) bündig ist und daß die Sektorelemente (8,9,10) an ihren sich vom Mittelpunkt nach radial außen erstreckenden Randbereichen (18) Ausnehmungen zur Aufnahme der Stege (26) besitzen.

9. Kabeldurchführungselement nach einem der vorhergehenden Ansprüche, dadurch **gekennzeichnet**, daß die Sektorelemente (8,9,10) in den von den Scheiben (15a,b;16a,b;17a,b) überlappten Randbereichen (18) angeformte axiale Nippel (29) besitzen und daß in den Scheiben (15a,b;16a,b;17a,b) dazu korrespondierende Aufnahmebohrungen (30) vorgesehen sind, von denen Schlitze (31) zu den Rändern führen.

10. Kabeldurchführungselement nach einem der vorhergehenden Ansprüche, dadurch **gekennzeichnet**, daß die Sektorelemente (8,9,10), die eine durchgehende Bohrung (7) besitzen, radial von dieser Bohrung (7) zum Mittelpunkt der Kreisscheibe verlaufende Schlitze (32) aufweisen.

11. Kabeldurchführungselement nach einem der vorhergehenden Ansprüche, dadurch **gekennzeichnet**, daß an den Seitenflächen der Randbereiche (18) der Sektorelemente (8,9,10) und an deren zum Mittelpunkt zeigenden Seitenfläche ein Wulst (33) angeformt ist, der in eine in der Außenfläche des Steges (26) bzw. des Kerns (14) ausgenommene Nut eingreift.

12. Kabeldurchführungselement nach einem der vorhergehenden Ansprüche, dadurch **gekennzeichnet**, daß das sternförmige Halteteil (13) einstückig und insbesondere aus einem Kunststoff spritzgeformt ist.

FIG.1

FIG. 2

EP 0 350 619 A2

FIG. 3

EP 0 350 619 A2

FIG.4

16a  33  18

8  16b  26  9

FIG. 5

16a  29  36

4

14  16b  23  19